Europäisches Patentamt

European Patent Office

Office européen des brevets

(19)

(11) Veröffentlichungsnummer : **0 326 898 B1**

# EUROPÄISCHE PATENTSCHRIFT

(12)

(45) Veröffentlichungstag der Patentschrift :
**20.03.91 Patentblatt 91/12**

(51) Int. Cl.$^5$ : **F02D 41/36, F02P 5/15, F02P 11/06, F02D 35/02**

(21) Anmeldenummer : **89101131.4**

(22) Anmeldetag : **23.01.89**

(54) **Verfahren mit Einrichtung zur Erkennung einer fehlerhaften Verbrennung in einem Verbrennungsmotor.**

(30) Priorität : **04.02.88 DE 3803337**

(43) Veröffentlichungstag der Anmeldung :
**09.08.89 Patentblatt 89/32**

(45) Bekanntmachung des Hinweises auf die
Patenterteilung :
**20.03.91 Patentblatt 91/12**

(84) Benannte Vertragsstaaten :
**DE ES FR GB IT**

(56) Entgegenhaltungen :
**DE-A- 3 419 727**

(56) Entgegenhaltungen :
**DE-A- 3 615 547**
**FR-A- 2 472 091**
**FR-A- 2 476 748**
**US-A- 4 331 117**

(73) Patentinhaber : **Siemens Aktiengesellschaft**
**Wittelsbacherplatz 2**
**W-8000 München 2 (DE)**

(72) Erfinder : **Pernpeintner, Alfons, Dipl.-Ing.**
**Frauenwahl 8**
**W-8421 Hausen (DE)**
Erfinder : **Frinzel, Udo, Dipl.-Ing. (FH)**
**Hasenheide 8**
**W-8679 Oberkotzau (DE)**

**Beschreibung**

Die Erfindung betrifft ein Verfahren gemäß Oberbegriff von Anspruch 1 und eine zugehörige Einrichtung (DE-OS 34 34 823).

Bei einer fehlerhaften, nicht von Motorklopfen herrührenden Verbrennung, verursacht z.B. durch Zündungs-, Einspritz- oder Kompressionsfehlfunktionen, kann es bei ausbleibender Zündung oder fehlender Kompression, aber fortgesetzter Einspritzung, zur Auswaschung des betroffenen Zylinders kommen. Hält diese Auswaschung länger an, entsteht durch Festfressen des Kolbens ein irreparabler Motorschaden. Außerdem führt eine unvollständige Verbrennung des eingespritzten Kraftstoffs zu einer Erhöhung der Umweltbelastung und zu einer Schädigung des Abgaskatalysators.

Aus der DE-OS 34 19 727 ist zwar ein Verfahren zur Klopfregelung von Brennkraftmaschinen bekannt, bei welchem auch andere Fehler als Motorklopfen an Deformierungen von Kennfeldern erkennbar sind. Bis diese Deformierungen jedoch erkannt werden, vergeht geraume Zeit, in der es bereits zu irreparablen Motorschäden kommen kann.

Aufgabe der Erfindung ist es, das bekannte Verfahren bzw. die Einrichtung zur Klopfregelung von Brennkraftmaschinen dahingehend zu erweitern, daß neben Motorklopfen auch diese nicht von Motorklopfen herrührenden fehlerhaften Verbrennungen schnell erkannt und entsprechende Gegenmaßnahmen eingeleitet werden können, bevor irreparable Motorschäden auftreten.

Diese Aufgabe wird erfindungsgemäß durch die in den Ansprüchen 1 und 4 genannten Merkmale gelöst. Danach wird die bekannte Klopfregelung um ein zweites Filter erweitert, in welchem alternierend zum Klopffilter das Sensorsignal zu einem Filtersignal gewandelt wird, welches für normale Verbrennungen typische Spektralanteile enthält. Dieses Signal wird während eines sogenannten "Zündmeßfensters" integriert und anschließend mit einem Referenzwert verglichen. Bei normalen Verbrennungen ist das integrierte Signal größer als dieser Referenzwert, andernfalls kleiner. Dann wird ein Fehlersignal abgegeben oder werden entsprechende Maßnahmen eingeleitet.

Vorzugsweise wird die Überprüfung der Verbrennung in der Brennkraftmaschine während eines "Zündmeßfensters" also nur in Betriebszuständen durchgeführt, bei denen kein Klopfen, insbesondere kein Hochdrehzahlklopfen auftritt. Es können dann weitgehend dieselben Baugruppen zur Überprüfung der Verbrennung und zur Klopfsignalauswertung verwendet werden, ohne daß es zu gegenseitiger Störung oder zu einer Überlastung – z.B. eines Prozessors – kommen kann.

Bevorzugt wird das Filtersignal bei Leerlauf der Brennkraftmaschine ausgewertet.

Zur Durchführung des erfindungsgemäßen Verfahrens wird die bekannte Einrichtung zur Klopfregelung um ein weiteres Filter ergänzt, welches aus dem Sensorsignal ein Filtersignal ausfiltert, welches für normale Verbrennungen typische Spektralanteile enthält. Über einen von der Steuereinheit gesteuerten Umschalter wird dieses Filtersignal alternierend zum Klopfsignal verarbeitet und mit einem Referenzwert verglichen und entsprechend dem Vergleichsergebnis bestimmte Maßnahmen getroffen. Der Umschalter kann vor oder nach den Filtern angeordnet sein.

Das Filtersignal bzw. das Klopfsignal kann über eine Endstufe einer Steuereinheit zugeführt werden, die bevorzugt als programmgesteuertes Prozessorsystem aufgebaut sein kann und die gesamte Auswertung des Sensorsignals steuert und ausführt.

Die beschriebenen Funktionen können in der zentralen Motorsteuerung, die die Brennkraftmaschine steuert, oder in einer getrennten Steuereinheit, die mit der Motorsteuerung zusammenarbeitet, enthalten sein.

Die Steuereinheit ermittelt ein Fehlersignal, wenn das Filtersignal unter dem vorerwähnten Referenzwert bleibt, d.h. eine fehlerhafte Verbrennung stattgefunden hat, und kann bei auftretendem Fehlersignal eine Warnlampe zur Anzeige des Fehlerfalls ansteuern.

Die Warnlampe wird vorzugsweise nur dann angesteuert, wenn in einer vorgegebenen Zeit eine bestimmte Anzahl von fehlerhaften Verbrennungen oder eine anhaltende Fehlfunktion eines oder mehrerer Zylinder der Brennkraftmaschine festgestellt worden ist. Zur Registrierung auftretender Fehlersignale und zur späteren Diagnose der Brennkraftmaschine wird bevorzugt ein Fehlerspeicher eingesetzt, der von der Steuereinheit angesteuert wird, wenn die Steuereinheit ein Fehlersignal ermittelt.

Wenn die Steuereinheit für einen Zylinder mehrere fehlerhafte Verbrennungen festgestellt hat, kann sie die Abschaltung der Einspritzung für den betroffenen Zylinder veranlassen.

Weitere vorteilhafte Ausgestaltungen der Erfindung sind in den Unteransprüchen gekennzeichnet.

Die Erfindung wird anhand der Figuren näher erläutert. Es zeigen :

Figur 1 ein Ausführungsbeispiel mit einem Prozessorsystem als Steuereinheit,

Figur 2 ein Zeitdiagramm zur Wirkungsweise des Ausführungsbeispiels nach Figur 1, und

Figur 3 ein Programm, das den Ablauf der Erkennung und Auswertung des Filtersignals durch die Steuereinheit schematisch wiedergibt.

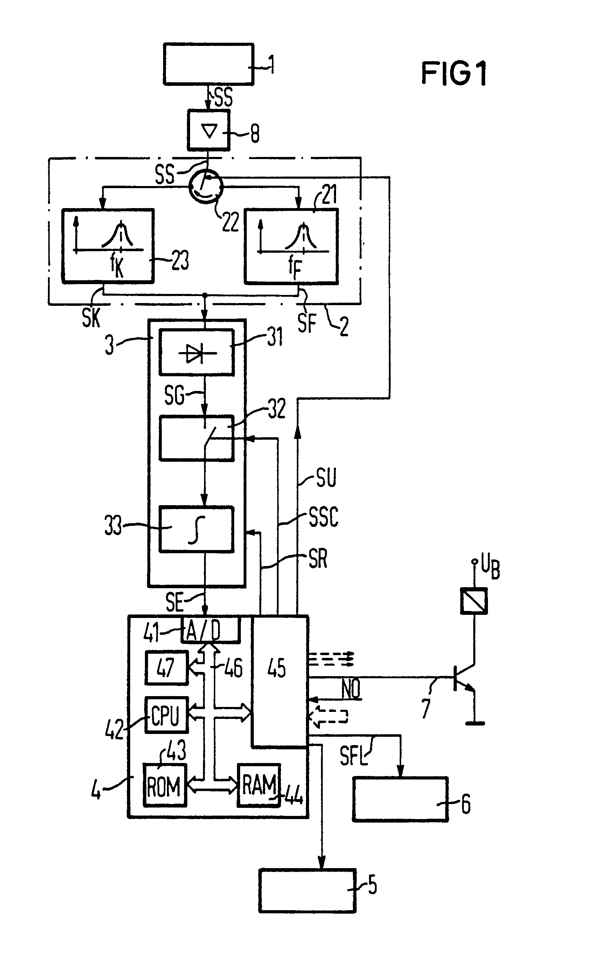

In Figur 1 ist eine Einrichtung zum erfindungsgemäßen Verfahren dargestellt, die im wesentlichen einen Sensor 1, ein Filter 2, eine Eingangsstufe 3 und eine Steuereinheit 4 aufweist.

An der Brennkraftmaschine ist als Sensor 1 ein Piezosensor befestigt, welcher deren Vibrationen erfaßt und in ein elektrisches Sensorsignal SS umsetzt.

Dem Sensor 1 ist ein Verstärker 8 zur Anpassung und Verstärkung des Sensorsignals SS nachgeschaltet.

Das Filter 2 hat einen Bandpaß 21, einen Klopfbandpaß 23 und einen Umschalter 22, der das Sensorsignal zum Klopfbandpaß 23 oder zum Bandpaß 21 durchschaltet und der von der Steuereinheit 4 angesteuert wird. Der Bandpaß 21 erzeugt aus dem Sensorsignal SS das Filtersignal SF, dessen Spektrum charakteristisch für eine normale Verbrennung in der Brennkraftmaschine ist. Der Klopfbandpaß 23 ermittelt aus dem Sensorsignal SS ein Klopfsignal SK, das charakteristisch für ein Hochdrehzahlklopfen oder für ein Klopfen aufgrund von Frühzündungen ist.

Die Eingangsstufe 3 weist einen Zweiweg-Gleichrichter 31, einen Schalter 32 und einen Integrierer 33 auf. Der Gleichrichter 31 ermittelt aus dem Filtersignal SF oder dem Klopfsignal SK ein Gleichspannungssignal SG, das er dem Schalter 32 zuführt. Dieser schaltet das Gleichspannungssignal SG zum Integrator 33 nur durch, wenn die Steuereinheit 4 ein Schaltsignal SSC zum Schließen des Schalters 32 ausgibt. Der Integrierer 33 integriert das durchgeschaltete Gleichspannungssignal SG und ermittelt ein Eingangssignal SE, das er der Steuereinheit 4 zuführt. Der Integrierer 33 hat einen Reset-Eingang, der von der Steuereinheit 4 aus mit einem Reset-Signal SR angesteuert wird.

Als Steuereinheit 4 ist ein programmgesteuertes Prozessorsystem mit einem zentralen Prozessor 42, einem Festspeicher 43, einem Lese-/Schreibspeicher 44, einem Zeitgeber 47, einem Analogdigitalwandler 41 und einer Ein-/Ausgabeeinheit 45 eingesetzt. Alle Untereinheiten der Steuereinheit 4 sind untereinander über einen Systembus 46 verbunden.

Der Zeitgeber 47 umfaßt neben dem Systemtaktgeber auch einen Timer, der vom Prozessor 42 aus gesetzt wird. Im Festspeicher (ROM) 43 ist die Systemsoftware gespeichert. Der Lese-/Schreibspeicher 44 (RAM) dient zur Abspeicherung von aktuellen Daten. Die Steuereinheit 4 ist nicht nur zur Überprüfung von Klopf- und Zündvorgängen in der Brennkraftmaschine eingesetzt, sondern hauptsächlich zur Steuerung der Brennkraftmaschine selbst. Dementsprechend hat die Ein-/Ausgabeeinheit 45 der Steuereinrichtung 4 eine größere Anzahl von Steuereingängen und -ausgängen, die durch gestrichelte Pfeile in der Figur 1 angedeutet sind. Unter anderem wertet die Steuereinheit 4 als Motorsteuerung auch die Drehzahl der Brennkraftmaschine aus, insbesondere die Leerlaufdrehzahl NO.

Die Steuereinheit 4 steuert Einspritzlastkreise an, von denen nur einer – 7 – dargestellt ist, der einen Schalttransistor zum Ein- und Ausschalten eines Einspritzventils aufweist.

Über die Ein-/Ausgabeeinheit 45 steuert die Steuereinheit 4 eine Warnlampe 5 für eine Fehleranzeige an.

Mit der Ein-/Ausgabeeinheit 45 ist ein Fehlerspeicher 6 verbunden, der für jeden Zylinder der Brennkraftmaschine einen eigenen Speicherplatz aufweist. Mit jedem ermittelten Fehlersignal SFL wird derjenige Speicherplatz im Fehlerspeicher 6 inkrementiert, der dem betroffenen Zylinder mit fehlerhafter Verbrennung zugeordnet ist. Der Fehlerspeicher 6 ist als RAM mit Refresh-Zyklus ausgelegt, um die abgespeicherten Daten dauerhaft zu erhalten.

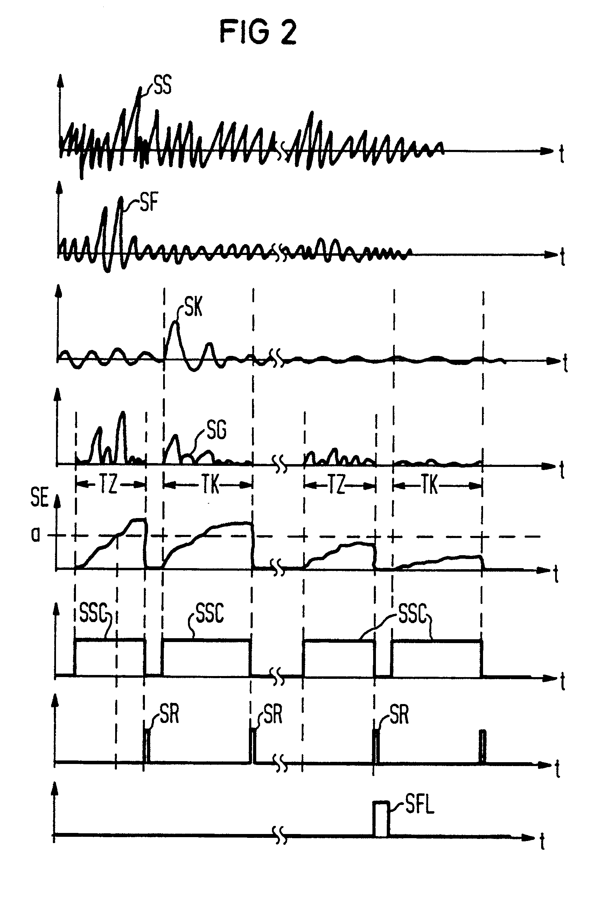

In Figur 2 sind schematisch die auftretenden Signalverläufe eingezeichnet. Das Sensorsignal SS hat in dem zeitlichen Bereich, in dem eine Verbrennung stattfindet und ein hoher Druck im Zylinder herrscht, eine erhöhte Signalamplitude, die sich von den sonstigen Geräuschen der Brennkraftmaschine deutlich abhebt. Entsprechend der Filterung des Sensorsignals SS zeigt das zugeordnete Filtersignal SF bzw. das Klopfsignal SK einen Bereich erhöhter Signalamplitude. Wie aus der Figur 2 zu ersehen ist, tritt Klopfen – d.h. erhöhte Signalamplitude des Klopfsignals SK – zeitlich etwas später als der für die Verbrennung signifikante Bereich des Filtersignals SF auf. Dementsprechend wird dem Filtersignal SF ein Zündmeßfenster TZ zugeordnet, während dessen Dauer signifikante Signalamplituden des Filtersignals SF auftreten. Das Zündmeßfenster TZ erstreckt sich vom Zündzeitpunkt ab über etwa 10° Kurbelwellenwinkel. Fast unmittelbar daran anschließend befindet sich das Klopfmeßfenster TK, während dessen charakteristische Signalamplituden des Klopfsignals SK auftreten.

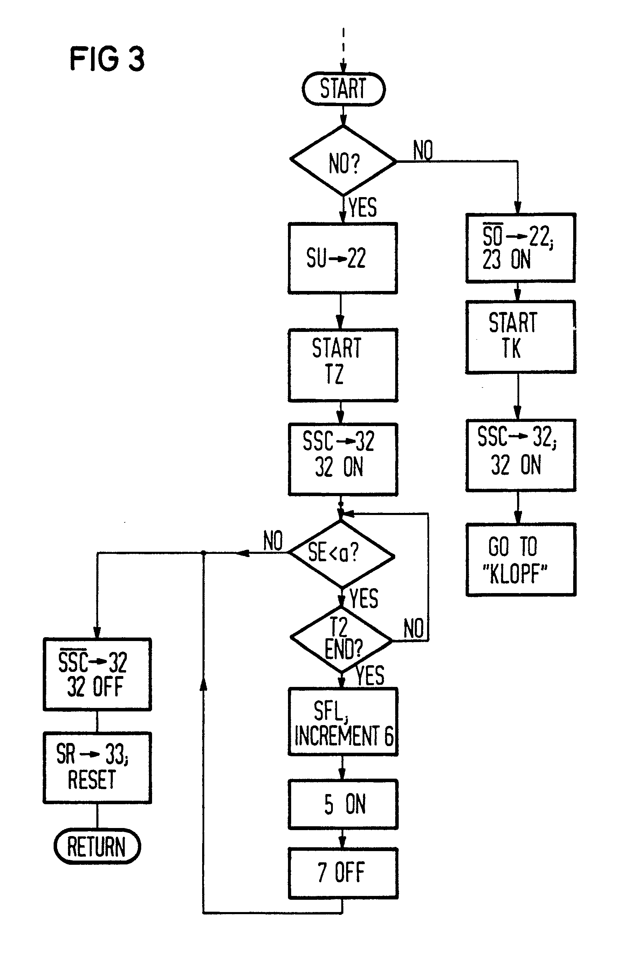

Zur Überprüfung der Verbrennung und des Klopfens der Brennkraftmaschine fragt die Steuereinheit 4 zuerst ab, ob die Brennkraftmaschine bei der niedrigen Leerlaufdrehzahl NO läuft (Figur 3). Liegt die Leerlaufdrehzahl NO nicht vor, der Motor befindet sich also nicht im Leerlaufbetrieb, gibt die Steuereinheit 4 über ihre Ein-/Ausgabeeinheit 45 das Umschaltsignal SU zurück, womit der Umschalter 22 das Sensorsignal SS zum Klopfbandpaß 23 im Filter 2 durchstellt. Außerdem setzt der Prozessor 42 den Timer 47 und startet das Klopfmeßfenster TK. Unmittelbar nachfolgend gibt die Steuereinheit das Schaltsignal SSC zum Einschalten des Schalters 32 aus. Die weitere Bearbeitung und Auswertung des Klopfsignals SK durch die Steuereinheit 4 ist bekannt.

Liegt die niedrige Leerlaufdrehzahl NO vor, die Brennkraftmaschine befindet sich im Leerlauf, gibt die Steuereinheit 4 das Umschaltsignal SU an den Umschalter 22 im Filter 2 aus, womit das Sensorsignal SS jetzt zum Bandpaß 21 durchgeschaltet ist, der das Filtersignal SF ermittelt. Unmittelbar nachfolgend setzt der Prozessor 42 den Zeitgeber 47 zum Starten des Zündmeßfensters TZ und gibt über die Ein-/Ausgabeeinheit 45 das Schaltsignal SSC zum Einschalten des Schalters 32 aus. Am Integrierer 33 steht jetzt das Gleichspannungssignal SG vom Gleichrichter 31 an, das dem gleichgerichteten Filtersignal SF entspricht. Der Integrierer 33 beginnt mit Anfang des Zündmeßfensters TZ das Gleichspannungssignal SG hochzuintegrieren und gibt das Eingangssignal SE an den Analogdigitalwandler 41 der Steuereinheit 4 weiter (siehe auch Figur 2).

Die Steuereinheit 4 tastet in äquidistanten zeitlichen Abständen während der Dauer des Zündmeßfensters TZ das Eingangssignal SE ab und vergleicht jeden abgetasteten Wert des Eingangssignals SE mit einem festgelegten Referenzwert a. Stellt die Steuereinheit 4 während der Dauer des Zündmeßfensters TZ fest, daß der Wert des Eingangssignals SE größer als der Referenzwert a ist, hat eine normale Verbrennung stattgefunden. Die Steuereinheit 4 nimmt das Schaltsignal SSC zurück, womit der Schalter 32 geöffnet wird. Unmittelbar darauf gibt die Steuereinheit 4 ein Reset-Signal SR an den Integrierer 33 aus, der daraufhin zurückgesetzt wird.

Bleibt dagegen der abgetastete Wert des Eingangssignals SE vom Integrierer 33 während der gesamten Dauer des Zündmeßfensters TZ unter dem Referenzwert a, hat keine reguläre Verbrennung stattgefunden. Die Steuereinheit 4 ermittelt daraufhin das Fehlersignal SFL als binäres Datenwort, das sie an den Fehlerspeicher 6 ausgibt. Im Fehlerspeicher 6 wird dann intern derjenige Speicherplatz inkrementiert, der dem betroffenen Zylinder mit fehlerhafter Verbrennung zugeordnet ist. Die Steuereinheit 4 steuert die Warnlampe 5 an, wenn mehrere Fehlersignals SFL ermittelt worden sind, oder eine Fehlfunktion von mindestens einem Zylinder des Verbrennungsmotors festgestellt worden ist. Um eine weitere Einspritzung in den Zylinder mit fehlerhafter Verbrennung zu vermeiden, schaltet die Steuereinheit über den zugeordneten Steuerkanal den jeweiligen Einspritzlastkreis 7 für den jeweils betroffenen Zylinder dauerhaft ab. Damit wird zuverlässig vermieden, daß trotz fehlerhafter Verbrennung im betroffenen Zylinder weiter Kraftstoff eingespritzt wird. Eine Auswaschung mit Motorschaden, eine zusätzliche Umweltbelastung durch unvollständige Verbrennung des Kraftstoffs und eine Schädigung des Abgaskatalysators werden dadurch vermieden.

Nach Ablauf des Zündmeßfensters TZ und Ermittlung eines Fehlersignals SFL öffnet die Steuereinheit den Schalter 32 und setzt den Integrierer 33 zurück.

Zur Funktionsüberprüfung eines Zylinders, dessen zugeordneter Einspritzlastkreis 7 von der Steuereinheit 4 abgeschaltet worden ist, führt die Steuereinheit 4 nach Ablauf einer festgelegten Einspritzpause eine Zwischeneinspritzung durch : Die Steuereinheit 4 schaltet den Einspritzlastkreis 7 ein und überprüft nach erfolgter Zündung, ob eine reguläre Verbrennung im Zylinder stattgefunden hat. Die Einspritzung für den betroffenen Zylinder wird wieder abgeschaltet, wenn die Steuereinheit 4 daraufhin ein Fehlersignal SFL ermittelt. Ansonsten wird der Zylinder wieder voll eingesetzt.

## Ansprüche

1. Verfahren zur Klopfregelung von Brennkraftmaschinen, wobei aus einem Sensorsignal (SS) ein Klopfsignal (SK) ausgefiltert wird, welches für Motorklopfen typische Spektralanteile enthält, dieses nach Gleichrichtung während eines kurbelwelle winkelsynchronen Klopfmeßfensters (TK) integriert und mit einem Klopfreferenzwert verglichen wird und entsprechend diesem Vergleich eine Zündwinkelverstellung erfolgt, und wobei aus dem Sensorsignal ein Filtersignal (SF) ausgefiltert und nach Gleichrichtung während eines zweiten kurbelwellenwinkelsynchronen Meßfensters (TZ) integriert wird, **dadurch gekennzeichnet**, daß das Filtersignal (SF) für normale Verbrennung typische Spektralanteile enthält und daß das Filtersignal (SF) mit einem zweiten Referenzwert (a) verglichen wird und ein Fehlersignal (SFL) erzeugt und ausgewertet wird, wenn das Filtersignal (SF) unterhalb des zweiten Referenzwertes (a) bleibt.

2. Verfahren nach Anspruch 1, **dadurch gekennzeichnet**, daß das Filtersignal (SF) während des Leerlaufs der Brennkraftmaschine ermittelt wird.

3. Verfahren nach Anspruch 1, **dadurch gekennzeichnet**, daß das zweite Meßfenster (Zündmeßfenster TZ) mit dem Zündzeitpunkt beginnt und sich über etwa 10° Kurbelwellenwinkel erstreckt.

4. Einrichtung zur Durchführung des Verfahrens nach Anspruch 1,
   – mit einem an der Brennkraftmaschine angeordneten sensor (1) zur Erzeugung eines sensorsignals (SS),
   – mit einem Verstärker (8) zur Verstärkung des Sensorsignals (SS),
   – mit einem auf für Motorklopfen typische Frequenzen (fK) abgestimmten Klopffilter (23) zum Ausfiltern von Klopfsignalen (SK) aus dem sensorsignal (SS),
   – mit einem Gleichrichter (31) zur Gleichrichtung der gefilterten Signale,
   – mit einer steuereinheit (4) zur Erzeugung eines kurbelwellensynchronen Klopfmeßfensters (TK) und eines zweiten kurbelwellensynchronen Meßfensters (TZ),
   – mit einem Integrator (33) zum Integrieren der gefilterten Signale während des Klopfmeßfensters (TK) und während des zweiten Meßfensters (TZ), und
   – mit einer Vergleichseinrichtung (in 4), welche das während des Klopfmeßfensters (TK) integrierte Klopfsignal (SK) mit einem Klopfreferenzwert vergleicht und wobei die Steuereinrichtung (4) entsprechend diesem Vergleich eine Zündwinkelverstellung vornimmt, **dadurch gekenn-**

zeichnet,

– daß ein zweites auf für nichtklopfende, normale Verbrennung typische Frequenzen (fF) abgestimmtes Filter (Bandpaß 21) zum Ausfiltern eines Filtersignals (SF) aus dem sensorsignal (SS) vorgesehen ist, welches parallel zum Klopffilter (23) angeordnet ist,

– daß ein Umschalter (22) vorgesehen ist, der während des Klopfmeßfensters (TK) das Klopfsignal (SK) und während des zweiten Meßfensters (TZ) das Filtersignal (SF) zum Gleichrichter (31) durchläßt, und

– daß die Vergleichseinrichtung (in 4) das während des zweiten Meßfensters (TZ) integrierte Filtersignal (SF) mit einem zweiten Referenzwert (a) vergleicht und ein Fehlersignal (SFL) erzeugt, wenn das Filtersignal (SF) unterhalb des zweiten Referenzwertes (a) bleibt, welches von der steuereinrichtung (4) ausgewertet wird.

5. Einrichtung nach Anspruch 4, **dadurch gekennzeichnet**, daß zwischen Gleichrichter (31) und Integrator (33) ein von der steuereinheit (4) angesteuerter schalter (32) vorgesehen ist, der nur während der beiden Meßfenster (TZ, TK) leitend geschaltet ist.

6. Einrichtung nach Anspruch 4, **dadurch gekennzeichnet**,

– daß ein Fehlerspeicher (6) vorgesehen ist, in dem jedem Zylinder der Brennkraftmaschine mindestens ein Speicherplatz zugeordnet ist,

– daß die steuereinheit (4) mit jedem Fehlersignal (SFL) den Inhalt desjenigen Speicherplatzes inkrementiert, der dem jeweiligen Zylinder mit fehlerhafter Verbrennung zugeordnet ist, und

– daß der Inhalt des Fehlerspeichers (6) zur Diagnose der Brennkraftmaschine auslesbar ist.

7. Einrichtung nach Anspruch 4, **dadurch gekennzeichnet**, daß die Steuereinheit (4) die Einspritzung von Kraftstoff für denjenigen Zylinder abschaltet, für den mindestens ein Fehlersignal (SFL) ermittelt worden ist.

8. Einrichtung nach Anspruch 4, **dadurch gekennzeichnet**, daß die steuereinheit (4) nach einer Einspritzpause durch eine Zwischeneinspritzung und Zündung den betroffenen Zylinder überprüft und die Einspritzung wieder abschaltet, wenn die Steuereinheit (4) auf die Zwischeneinspritzung hin ein Fehlersignal (SFL) ermittelt.

9. Einrichtung nach Anspruch 4, **dadurch gekennzeichnet**, daß die steuereinheit (4) eine Warnlampe (5) einschaltet, wenn mindestens ein Fehlersignal (SFL) auftritt.

10. Einrichtung nach Anspruch 4, **dadurch gekennzeichnet**, daß die steuereinheit (4) die Warnlampe (5) dann einschaltet, wenn die Steuereinheit (4) die Einspritzung von Kraftstoff in mindestens einen Zylinder des Verbrennungsmotors abgeschaltet hat.

## Claims

1. Method for the knock control of internal combustion engines, a knock signal (SK) being filtered out of a sensor signal (SS), which knock signal contains spectral components typical of engine knocking, this signal being integrated, after rectification, during a crankshaft-angle-synchronous knock measuring window (TK) and compared with a knock reference value and an ignition angle adjustment being carried out in accordance with this comparison, and a filter signal (SF) being filtered out of the sensor signal and, after rectification, being integrated during a second crankshaft-angle-synchronous measuring window (TZ), characterized in that the filter signal (SF) contains spectral components typical of normal combustion and that the filter signal (SF) is compared with a second reference value (a) and a fault signal (SFL) is produced and evaluated if the filter signal (SF) remains below the second reference value (a).

2. Method according to Claim 1, characterized in that the filter signal (SF) is determined during the idling of the internal combustion engine.

3. Method according to Claim 1, characterized in that the second measuring window (ignition measuring window TZ) begins with the ignition point and extends over about 10° of crankshaft angle.

4. Device for carrying out the method according to Claim 1,

– having a sensor (1), arranged at the internal combustion engine, for producing a sensor signal (SS),

– having an amplifier (8) for amplifying the sensor signal (SS),

– having a knock filter (23), tuned for frequencies (fK) typical of engine knocking, for filtering knock signals (SK) out of the sensor signal (SS),

– having a rectifier (31) for rectifying the filtered signals,

– having a control unit (4) for producing a crankshaft-synchronous knock measuring window (TK) and a second crankshaft-synchronous measuring window (TZ),

– having an integrator (33) for integrating the filtered signals during the knock measuring window (TK) and during the second measuring window (TZ), and

– having a comparison device (in 4) which compares the knock signal (SK) integrated during the knock measuring window (TK) with a knock reference value, and the control device (4) performing an ignition angle adjustment in accordance with this comparison,

characterized in that

– a second filter (bandpass 21), tuned to frequencies (fF) typical of non-knocking, normal combustion, for filtering a filter signal (SF) out of the sensor signal (SS) is provided, which filter is arranged in parallel with the knock filter (23),

– a changeover switch (22) is provided which, during the knock measuring window (TK) allows the knock signal (SK) through to the rectifier (31) and, during the second measuring window (TZ) allows the filter signal (SF) through to the rectifier (31), and

– the comparison device (in 4) compares the filter signal (SF) integrated during the second measuring window (TZ) with a second reference value (a) and produces a fault signal (SFL) if the filter signal (SF) which is evaluated by the control device (4) remains below the second reference value (a).

5. Device according to Claim 4, characterized in that a switch (32) controlled by the control unit (4) is provided between rectifier (31) and integrator (33), said switch only being turned on during the two measuring windows (TZ, TK).

6. Device according to Claim 4, characterized in that

– a fault memory (6) is provided, in which at least one memory location is allocated to each cylinder of the internal combustion engine,

– with each fault signal (SFL), the control unit (4) increments the contents of that memory location which is allocated to the respective cylinder with faulty combustion and

– the contents of the fault memory (6) can be read out for the purpose of diagnosing the internal combustion engine.

7. Device according to Claim 4, characterized in that the control unit (4) switches off the injection of fuel for that cylinder for which at least one fault signal (SFL) has been determined.

8. Device according to Claim 4, characterized in that, after an injection pause, the control unit (4) checks the affected cylinder by an interim injection and ignition and switches off injection again if the control unit (4) determines a fault signal (SFL) in relation to the interim injection.

9. Device according to Claim 4, characterized in that the control unit (4) switches on a warning lamp (5) if at least one fault signal (SFL) occurs.

10. Device according to Claim 4, characterized in that the control unit (4) switches on the warning lamp (5) when the control unit (4) switches off injection of fuel into at least one cylinder of the combustion engine.

**Revendications**

1. Procédé pour régler le cognement de moteurs à combustion interne, selon lequel on sépare par filtrage, d'un signal (SS) d'un capteur, un signal de cognement (SK), qui contient des composantes spectrales typiques pour le cognement du moteur, on intègre ce signal après redressement, pendant une fenêtre (TK) de mesure du cognement synchrone avec l'angle du vilebrequin et on le compare à une valeur de référence du cognement et on réalise, sur la base de cette comparaison, un réglage de l'angle d'allumage, et selon lequel on sépare par filtrage, du signal du capteur, un signal filtré (SF) et on l'intègre, après redressement, pendant une seconde fenêtre de mesure (TZ) synchrone avec l'angle du vilebrequin, caractérisé par le fait

que le signal filtré (SF) contient des composantes spectrales typiques pour une combustion normale, et que l'on compare le signal filtré (SF) à une seconde valeur de référence (a) et qu'on forme et on évalue un signal de défaut (SFL) lorsque le signal filtré (SF) reste inférieur à une seconde valeur de référence (a).

2. Procédé suivant la revendication 1, caractérisé par le fait qu'on détermine le signal filtré (SF) pendant le fonctionnement au ralenti du moteur à combustion interne.

3. Procédé suivant la revendication 1, caractérisé par le fait que la seconde fenêtre de mesure (fenêtre TZ de mesure d'allumage) commence à l'instant d'allumage et s'étend sur un angle du vilebrequin égal à environ 10°.

4. Dispositif pour la mise en oeuvre du procédé suivant la revendication 1,

– comportant un capteur (1) monté sur le moteur à combustion interne et servant à produire un signal (SS),

– un amplificateur (8) servant à amplifier le signal (SS) du capteur,

– un filtre (23) de séparation du cognement, qui est réglé sur des fréquences (fK) typiques du cognement du moteur et sert à séparer par filtrage le signal de cognement (SK) du signal (SS) du capteur,

– un redresseur (31) servant à redresser les signaux filtrés,

– une unité de commande (4) servant à produire une fenêtre (TK) de mesure du cognement, synchrone avec le vilebrequin, et une seconde fenêtre de mesure (TZ) synchrone avec le vilebrequin,

– un intégrateur (33) servant à intégrer les signaux filtrés pendant la fenêtre (TK) de mesure du cognement et pendant la seconde fenêtre de mesure (TZ), et

– un dispositif comparateur (dans 4), qui compare le signal de cognement (SK) intégré pendant la fenêtre (TK) de mesure du cognement à une valeur de référence du cognement, le dispositif de commande (4) réalisant un décalage de l'angle d'allumage sur la base de cette comparaison,

caractérisé par le fait

– qu'il est prévu un second filtre (filtre passe-bande 21), réglé sur des fréquences (fF) typiques pour une combustion normale sans cognement, et servant à séparer un signal filtré (SF) à partir du signal (SS) du capteur, ce filtre étant monté en parallèle avec le filtre (23) de séparation du cognement,

– qu'il est prévu un commutateur (22) qui transmet le signal de cognement (SK) pendant la fenêtre (TK) de mesure du cognement et transmet le signal filtré (SF) au redresseur (31), pendant la seconde fenêtre de mesure (TZ), et

– que le dispositif comparateur (dans 4) compare le signal filtré (SF), intégré pendant la seconde fenêtre de mesure (TZ), à une seconde valeur de référence (a) et produit un signal de défaut (SFL) lorsque le signal filtre (SF) reste inférieur à une seconde valeur de référence (a), qui est évaluée par le dispositif de commande (4).

5. Dispositif suivant la revendication 4, caractérisé par le fait qu'entre le redresseur (31) et l'intégrateur (33) est prévu un interrupteur (32), qui est commandé par l'unité de commande (4) et est placé à l'état conducteur uniquement pendant les deux fenêtres de mesure (TZ, TK).

6. Dispositif suivant la revendication 4, caractérisé par le fait

– qu'il est prévu une mémoire de défauts (6), dans laquelle au moins un emplacement de mémoire est associé à chaque cylindre du moteur à combustion interne,

– que l'unité de commande (4) incrémente, avec chaque signal de défaut (SFL), le contenu de l'emplacement de mémoire, qui est associé au cylindre respectif dans lequel la combustion est défectueuse, et

– que le contenu de la mémoire de défauts (6) peut être lu pour réaliser le diagnostic du moteur à combustion interne.

7. Dispositif suivant la revendication 4, caractérisé par le fait que l'unité de commande (4) interrompt l'injection du carburant pour le cylindre, pour lequel au moins un signal de défaut (SFL) a été déterminé.

8. Dispositif suivant la revendication 4, caractérisé par le fait que l'unité de commande (4) contrôle le cylindre concerné, après un arrêt de l'injection, au moyen d'une injection intermédiaire et d'un allumage, et que l'injection est à nouveau interrompue lorsque l'unité de commande (4) détermine un signal de défaut (SFL) lors de l'injection intermédiaire.

9. Dispositif suivant la revendication 4, caractérisé par le fait que l'unité de commande (4) branche une lampe témoin (5) lorsqu'au moins un signal de défaut (SFL) apparaît.

10. Dispositif suivant la revendication 4, caractérisé par le fait que l'unité de commande (4) branche la lampe témoin (5) lorsque l'unité de commande (4) a interrompu l'injection du carburant dans au moins un cylindre du moteur à combustion interne.

FIG1

# FIG 2

# FIG 3

```
                              START

                               │
                        ┌──────────────┐
                   YES  │    NO?       │  NO ──────────────┐
                  ┌─────│              │                   │
                  │     └──────────────┘                   │
                  ▼                                        ▼
            ┌──────────┐                            ┌──────────┐
            │  SU→22   │                            │  S̄Ō→22;  │
            │          │                            │  23 ON   │
            └──────────┘                            └──────────┘
                  │                                        │
                  ▼                                        ▼
            ┌──────────┐                            ┌──────────┐
            │  START   │                            │  START   │
            │    TZ    │                            │    TK    │
            └──────────┘                            └──────────┘
                  │                                        │
                  ▼                                        ▼
            ┌──────────┐                            ┌──────────┐
            │ SSC→32   │                            │ SSC→32;  │
            │  32 ON   │                            │  32 ON   │
            └──────────┘                            └──────────┘
                  │                                        │
                  ▼                                        ▼
        NO   ┌──────────┐                           ┌──────────┐
     ◄───────│ SE<a?    │                           │  GO TO   │
     │       └──────────┘                           │ "KLOPF"  │
     │             │ YES                             └──────────┘
     │             ▼
     │       ┌──────────┐
     │       │   T2     │  NO
     │       │  END?    │────────
     │       └──────────┘
     │             │ YES
     ▼             ▼
┌──────────┐  ┌──────────────┐
│ S̄S̄C̄→32   │  │   SFL;        │
│  32 OFF  │  │ INCREMENT 6  │
└──────────┘  └──────────────┘
     │             │
     ▼             ▼
┌──────────┐  ┌──────────┐
│  SR→33;  │  │   5 ON   │
│  RESET   │  └──────────┘
└──────────┘       │
     │             ▼
     ▼       ┌──────────┐
  RETURN     │  7 OFF   │
             └──────────┘
```